(19) **Europäisches Patentamt**
**European Patent Office**
**Office européen des brevets**

(11) **EP 2 318 286 B1**

(12) **EUROPÄISCHE PATENTSCHRIFT**

(45) Veröffentlichungstag und Bekanntmachung des Hinweises auf die Patenterteilung:
**25.01.2012 Patentblatt 2012/04**

(21) Anmeldenummer: **09776915.2**

(22) Anmeldetag: **02.07.2009**

(51) Int Cl.:
**B65D 65/02** *(2006.01)* **G06K 19/06** *(2006.01)*

(86) Internationale Anmeldenummer:
**PCT/EP2009/004771**

(87) Internationale Veröffentlichungsnummer:
**WO 2010/003585 (14.01.2010 Gazette 2010/02)**

(54) **VERPACKUNGSFOLIE FÜR PRODUKTAUTHENTIFIZIERUNG, AUTHENTIFIZIERUNGSVERFAHREN UND -SYSTEM**

PACKAGING FILM FOR PRODUCT AUTHENTICATION, AUTHENTICATION METHOD AND SYSTEM

FILM D'EMBALLAGE POUR L'AUTHENTIFICATION D'UN PRODUIT, PROCEDE ET SYSTEME D'AUTHENTIFICATION

(84) Benannte Vertragsstaaten:
**DE ES FR GB HU IT PL PT**

(30) Priorität: **11.07.2008 DE 102008032781**

(43) Veröffentlichungstag der Anmeldung:
**11.05.2011 Patentblatt 2011/19**

(73) Patentinhaber: **Klöckner Pentaplast GmbH & Co. KG**
**56412 Heiligenroth (DE)**

(72) Erfinder:
• **KOHLERT, Christian**
**56414 Oberahr (DE)**
• **SCHMIDT, Bernd**
**54614 Gackenbach (DE)**
• **EGENOLF, Walter**
**56244 Ötzingen (DE)**
• **ZISTJAKOVA, Tamara**
**St. Petersburg 191114 (RU)**

(74) Vertreter: **Plate, Jürgen et al**
**Plate Schweitzer Zounek**
**Patentanwälte**
**Rheingaustrasse 196**
**65203 Wiesbaden (DE)**

(56) Entgegenhaltungen:
**EP-A- 1 475 242     EP-A1- 1 953 684**
**WO-A- 02/50790     GB-A- 2 324 065**
**US-A1- 2005 140 495     US-A1- 2006 268 259**

## Beschreibung

Die vorliegende Erfindung betrifft eine Verpackungsfolie für Produktauthentifizierung sowie ein Authentifizierungsverfahren und -system, welche in Verbindung mit der Verpackungsfolie eingesetzt werden.

Verfahren zur Authentifizierung von Objekten, wie z.B. Dokumenten oder Geldscheinen sind im Stand der Technik bekannt. US 2005/140 495 offenbart die Verwendung von RFID für Produkt identifizierung.

US 4,218,674 offenbart ein System und eine Methode zur Prüfung der Authentizität eines Dokuments, wobei anhand des Dokuments generierte, binäre Ausgangssignale mit zuvor abgespeicherten binären Signalen verglichen werden. Das Dokument enthält ein Sicherheitskennzeichen in Form von zufällig verteilten Fasern aus einem magnetischen oder magnetisierbaren Material. Zum Auslesen des Sicherheitskennzeichens wird das Dokument entlang einer vorbestimmten Spur abgetastet mit einem Detektor, der magnetische Felder registriert und bei Überquerung der magnetischen oder magnetisierten Fasern einen elektrischen Puls ausgibt.

DE 103 04 805 A1 beschreibt ein Verfahren zur Herstellung von Sicherheitskennzeichen, bei dem ein auf einem zu kennzeichnenden Objekt vorhandenes oder darauf aufgebrachtes Zufallsmuster genutzt wird. Hierzu wird das Zufallsmuster mit einem Lesegerät in einen Computer eingelesen und ein Fingerabdruck extrahiert, der individuelle Merkmale des Musters beinhaltet. Optional wir auf dem Objekt eine Identifikationsnummer aufgebracht. Der extrahierte Fingerabdruck wird in einem maschinellen Datenspeicher abgelegt. Zur Identifikation der gekennzeichneten Objekte wird das Zufallsmuster vom Objekt eingelesen, der Fingerabdruck extrahiert und mit dem im Datenspeicher abgelegten Fingerabdruck verglichen.

DE 60 2004 007 850 T2 offenbart ein Verfahren, ein Computerprogramm und eine elektronische Vorrichtung zur Bestimmung der Echtheit eines Objekts, wobei das Objekt ein dreidimensionales Muster von zufällig verteilten Partikeln aufweist. Das Verfahren arbeitet mit einem ersten und zweiten Code. Der zweite Code wird durch zweidimensionale Datenerfassung an dem Muster zufällig verteilter Partikel ermittelt. Hierzu wird das Objekt mit weißem Streulicht beleuchtet und das vom Objekt reflektierte und transmittierte Licht detektiert. Bei dem Objekt, das ein Muster zufällig verteilter Partikel umfasst, handelt es sich vorzugsweise um ein Etikett.

Die im Stand der Technik bekannten Sicherheitskennzeichen können zwei Gruppen zugeordnet werden:

(a) Das Sicherheitskennzeichen ist ein inhärenter Bestandteil des Produkts, der während der Herstellung zufällig entsteht oder durch gezielte Maßnahmen erzeugt wird. Hierbei sind aufgrund der stofflichen Zusammensetzung, Oberflächenstruktur und Form des Produkts der Art und Beschaffenheit der Kennzeichnung enge Grenzen gesetzt. Als produkt-inhärente Kennzeichen sind u.a. optisch detektierbare, aus Kratzern oder Fasern gebildete zufällige Oberflächenmuster oder genau definierte Isotopenbeimengungen in polymeren Werkstoffen bekannt. Produkt-inhärente Sicherheitskennzeichen haben einen eng beschränkten Einsatzbereich und sind für Lebensmittel, Medikamente, Kosmetika und Bekleidungstextilien ungeeignet.

(b) Das Sicherheitskennzeichen ist als Etikett ausgestaltet und wird auf dem Produkt angebracht. Etiketten haben den Nachteil, dass sie eine beschränkte Fläche aufweisen und die Lokalisierung und Identifizierung des Sicherheitskennzeichens erleichtern. Mittels moderner, kommerziell verfügbarer Instrumente der Messtechnik und Analytik kann die physikalisch-chemische Beschaffenheit und das Funktionsprinzip des Sicherheitskennzeichens in der Regel schnell ermittelt werden. Ist die Beschaffenheit und das Funktionsprinzip bekannt, steht einer Nachbildung allenfalls ein Kopierschutz entgegen. Im Stand der Technik werden zwei Methoden für die Ausbildung eines Kopierschutzes beschrieben, wobei die beiden Methoden auch kombiniert werden. Zum Einen wird ein "unsichtbares" und zum Anderen ein nicht-reproduzierbares bzw. nur
unter unverhältnismäßig großem Aufwand reproduzierbares Sicherheitskennzeichen vorgeschlagen.

Hinsichtlich des Kopierschutzes von Sicherheitskennzeichen spielen folgende Aspekte eine wichtige Rolle:

i) Reproduzierbarkeit

Ein Sicherheitskennzeichen sollte möglichst nicht reproduzierbar sein. Hierbei ist der Begriff "reproduzierbar" nicht im Sinne einer exakten physischen Nachbildung zu verstehen sondern in Bezug auf die messtechnische Erfassung bestimmter in dem Sicherheitskennzeichen vorhandener Muster. In bekannten Sicherheitskennzeichen werden zumeist räumliche - in der Regel zweidimensionale Muster wie z.B. Smartcodes verwendet, die mittels optischer oder magnetischer Detektoren erfasst werden. Als Beispiel für dreidimensionale Muster sind vor allem Hologramme zu nennen. Weniger gebräuchliche Sicherheitskennzeichen beinhalten chemische Marker wie z.B. Isotope, die mittels spektrometrischer Messmethoden detektiert werden.

Um ein Sicherheitskennzeichen zu reproduzieren, muss das Muster zunächst identifiziert werden. Die Identifikation eines Musters kann auf verschiedene Weise erschwert werden, u.a. indem ein Muster verwendet wird, das für das menschliche Auge nicht sichtbar ist. So werden im Stand der Technik verborgene (sogenannte covert) Muster vorgeschlagen. Die meisten der bekannten unsichtbaren Muster sind jedoch mit heute verfügbaren Messmethoden mit geringem Aufwand zu identifizieren.

Nach Identifikation gilt es, das Muster derart nachzustellen bzw. zu reproduzieren, dass die Reproduktion bei der messtechnischen Erfassung vom Original nicht unterscheidbar ist. Prinzipiell kann jedes identifizierte Muster reproduziert werden, wobei jedoch dem hierfür erforderlichen Aufwand entscheidende Bedeutung zukommt. Übersteigt der Aufwand der Reproduktion den hieraus resultierenden wirtschaftlichen Vorteil, so ist die Reproduktion nicht lohnend und unterbleibt. Der Aufwand der Reproduktion steht in enger Beziehung zu der messtechnischen Erfassung des Musters. Je einfacher die messtechnische Erfassung gestaltet ist, desto weniger Aufwand erfordert im Allgemeinen die Reproduktion.

Im Weiteren ist der Informationsgehalt von Sicherheitskennzeichen wichtig. Der Begriff Informationsgehalt ist hierbei als Synonym für die Anzahl von Strukturdetails, wie etwa Punkte oder Linien zu verstehen. Je höher der Informationsgehalt, desto mehr Aufwand erfordert die Nachbildung. Der Informationsgehalt ist nach oben begrenzt durch das Flächenverhältnis des Sicherheitskennzeichens zu der Größe der Detailstrukturen. Je größer die Fläche des Sicherheitskennzeichens und je kleiner die Detailstrukturen sind, desto größer ist der maximal mögliche Informationsgehalt.

ii) Messtechnische Erfassung

Die messtechnische Erfassung von Sicherheitskennzeichen erfolgt in der Regel an zwei oder mehreren Orten und/oder Zeitpunkten, z.B. bei dem Erzeuger eines Produktes, ggf. in einem Frachtlager oder während des Transportes und bei einem Händler bzw. im Vertrieb. Hierbei wird ein Produkt zunächst in einem Kennzeichnungsschritt mit einem Sicherheitskennzeichen ausgestattet. Das Sicherheitskennzeichen bzw. das darin enthaltene Muster ist in der Regel nicht a-priori bekannt, sondern wird messtechnisch erfasst und das Messsignal in verschlüsselter oder unverschlüsselter Form als Identcode aufgezeichnet. In einem späteren Identifikationsschritt wird ein auf einem Produkt befindliches Sicherheitskennzeichen in ähnlicher Weise wie im Kennzeichnungsschritt messtechnisch erfasst und das Messsignal in verschlüsselter oder unverschlüsselter Form mit vorhandenen Identcodes verglichen.

Bei der messtechnischen Erfassung wird das mit einem Sicherheitskennzeichen versehene Produkt unter einem Detektor positioniert oder an einem Detektor vorbeigeführt. Letzteres ist z.B. der Fall bei Laserscannern, magnetischen Leseköpfen oder Kameras mit Zeilensensor, wie sie in der industriellen Bildverarbeitung gebräuchlich sind. Die Positionierung bzw. die Bewegung des Produkts relativ zum Detektor erfolgt manuell oder mittels einer mechanischen Vorrichtung wie z.B. eines Förderbandes. Hierbei sind aufgrund produktionstechnischer oder logistischer Gegebenheiten bestimmte Vorgaben einzuhalten. Häufig ist es erforderlich oder erwünscht, dass die messtechnische Erfassung berührungslos erfolgt, wobei der Arbeitsabstand zwischen dem Produkt und einem Detektor einen Mindestabstand von einigen cm bis zu wenigen Metern nicht unterschreiten darf. Wenn der Arbeitsabstand mehr als einige cm betragen soll, werden für die messtechnische Erfassung bevorzugt optische, insbesondere bildgebende Verfahren eingesetzt. Hierbei sind wichtige Messparameter, wie Auflösung, Bildfeld und Arbeitsabstand nicht beliebig einstellbar, sondern beeinflussen sich gemäß den Gesetzen der Optik gegenseitig. Zusätzlich, wenn auch in geringerem Umfang, ist die Wahl der Messparameter durch das verwendete Kameraobjektiv eingeschränkt. Mit den für den industriellen Bedarf konzipierten Kameraobjektiven können, im Gegensatz zu Hochleistungsobjektiven für astronomische oder satellitentechnische Anwendungen, die Möglichkeiten der optischen Messtechnik nicht voll ausgeschöpft werden.

Die messtechnische Erfassung von Sicherheitskennzeichen muss verschiedenen z.T. gegenläufigen Anforderungen genügen; hierzu zählen:

- hohe Sensitivität, so dass geringfügige Abweichungen eines kopierten Sicherheitskennzeichens vom Original erkannt werden. Im Fall der optischen Erfassung von zweidimensionalen Mustern bedeutet Sensitivität vor allem hohe laterale Auflösung und Kontrast, d.h. das verwendete optische Messsystem muss eine optimierte Modulationsübertragungsfunktion aufweisen.
- Immunität gegenüber messtechnischen Abweichungen, damit die falsch-positive Fehlerrate, d.h. die Zahl von fälschlich als Reproduktion erkannten originären Sicherheitskennzeichen gering ist. Eine häufige messtechnische Abweichungen bei der optischen Erfassung ist Fehlpositionierung des Sicherheitskennzeichens relativ zum Detektor, Vibrationen oder unterschiedliche Beleuchtungsverhältnisse.
- geringe Kosten für Anschaffung und Betrieb des Messsystems.
- hohe Geschwindigkeit bzw. hoher Durchsatz.
- Automatisierung.

iii) Kodierung

Vorliegend sind unter dem Begriff Kodierung alle bekannten elektronischen und mathematischen Verfahren subsummiert, die bei der messtechnischen Erfassung, Umwandlung, Verschlüsselung, Speicherung und Wiedergabe von Sicherheitskennzeichen eingesetzt werden. Diese Verfahren können in Form von elektronischer Hard- oder Software implementiert sein. Das bei der Kodierung eingesetzte Datenvolumen wird im wesentlichen durch den Informationsgehalt des Sicherheitskennzeichens in Verbindung mit dem Auflösungsvermögen der messtechnischen Erfassung bestimmt. Bei der optischen Erfassung von zweidimensionalen Mustern ist das Datenvolumen nach oben begrenzt durch das Produkt aus der Anzahl der messtechnisch aufgelösten Bildelemente (Auflösungspixel) und der Anzahl der Farb- oder Kontraststufen je Auflösungspixel. Detailstrukturen des Sicherheitskennzeichens, die kleiner sind als das Auflösungspixel können nicht detektiert und somit nicht kodiert werden.

Ein zentrales Problem der optischen Erfassung von zweidimensionalen Sicherheitskennzeichen wird im Folgenden kurz erläutert. Für das Verhältnis von lateraler Auflösung und Schärfentiefe eines Kameraobjektivs gilt in guter Näherung die Beziehung:

$$\Delta z = \Delta x^2 / \lambda$$

wobei $\Delta z$ die Schärfentiefe, $\lambda$ die Wellenlänge des für die Abbildung verwendeten Lichtes und $\Delta x$ die laterale objektseitige Auflösung bezeichnen. Die Mitte des sichtbaren Lichtspektrums liegt bei etwa 500 nm. Wird dieser Wert in die obige Gleichung eingesetzt, d.h. $\lambda$ = 500 nm, so ergibt sich folgendes:

| $\Delta x$ [$\mu$m] | 1 | 5 | 10 | 15 | 20 | 30 | 40 | 50 | 60 |
|---|---|---|---|---|---|---|---|---|---|
| $\Delta z$ [mm] | 0,002 | 0,05 | 0,2 | 0,5 | 0,8 | 1,8 | 3,2 | 5,0 | 7,2 |

Die Schärfentiefe $\Delta z$ gibt den Tiefenbereich an, in dem zwei Linien oder Punkte, die auf dem Sicherheitskennzeichen in einem Abstand $\Delta x$ nebeneinander liegen, in der Bildebene noch als getrennte Objekte abgebildet werden. Damit ein Strukturdetail der Größe 40 $\mu$m noch scharf abgebildet wird, darf dieses um nicht mehr als 3,2 mm von der Fokusebene des Kameraobjektivs beabstandet sein. Dementsprechend erfordert die optische Erfassung von Sicherheitskennzeichen mit einer Auflösung von ≤ 40 $\mu$m eine präzise Positionierung des Sicherheitskennzeichens relativ zum Detektor mit einer Toleranz von ≤ 3,2 mm. Ein geringer lateraler Versatz oder eine geringe Winkeldifferenz des Sicherheitskennzeichens bei der optischen Erfassung im Identifikationsschritt relativ zum Kennzeichnungsschritt würde eine falsch-positive Fehlererkennung bewirken. Um dieses Problem bei der hochauflösenden optischen Erfassung zu vermeiden, ist es erforderlich neben einem geeigneten Kameraobjektiv mechanische Positioniersysteme hoher Präzision einzusetzen. Sofern dies mit logistischen Gegebenheiten vereinbar ist, verbietet sich der Einsatz von präzisen mechanischen Positionier- oder Transportsystemen häufig aus Kostengründen.

Außerdem ist zu bedenken, dass Strukturdetails mit einer Größe um 40 $\mu$m mit den heute verfügbaren technischen Möglichkeiten einfach zu reproduzieren sind. So haben marktübliche Laser- oder Tintenstrahldrucker für den privaten Anwender bereits Auflösungen von 600 bis 2400 dpi (42 bis 11 $\mu$m). Solche Drucker sind damit geeignet, zweidimensionale Sicherheitskennzeichen mit Strukturdetails im Bereich von 10 bis 40 $\mu$m zu reproduzieren.

Aus den voranstehenden Ausführungen ist ersichtlich, dass für zahlreiche kommerzielle Anwendungen Sicherheitskennzeichen mit sehr feinen Strukturdetails von ≤ 40 $\mu$m ungeeignet sind.

Die vorliegende Erfindung hat die Aufgabe, die oben genannten Nachteile der bekannten Sicherheitskennzeichen zu überwinden und ein Sicherheitskennzeichen bereit zu stellen, das sich für kommerzielle Anwendungen eignet, das mit moderatem messtechnischem Aufwand erfassbar ist und zugleich einen hohen Kopierschutz bietet. Diese Aufgabe wird gelöst durch eine Verpackungsfolie gemäss Anspruch 1 sowie ein Authentifizierungsverfahren nach Anspruch 12 und ein Authentifizierungssystem gemäss Anspruch 17, welche in Verbindung mit der Verpackungsfolie eingesetzt werden.

Die erfindungsgemäße Verpackungsfolie umfasst Pigmentpartikel, wobei die mittlere Anzahl der Pigmentpartikel pro cm$^2$ der Verpackungsfolie im Bereich von 1 bis 100 liegt und die Pigmentpartikel in der Fläche der Verpackungsfolie in einer Zufallsverteilung vorliegen. Vorzugsweise beträgt die mittlere Anzahl der Pigmentpartikel pro cm$^2$ 1 bis 10, bevorzugt 1 bis 5, und insbesondere 1 bis 2. Die Pigmentpartikel weisen einen mittleren äquivalenten Durchmesser im Bereich von 100 bis 50000 nm auf, wobei der Begriff "äquivalenter Durchmesser" den Durchmesser eines kugelförmigen Partikels gleichen Volumens V bezeichnet (d.h. der äquivalente Durchmesser entspricht 2 x (0,75 x V / $\pi$)$^{1/3}$ ). Vorzugsweise sind die Pigmentpartikel weiß oder im Spektralbereich des sichtbaren Lichts von 380 bis 750 nm transparent. In einer vorteilhaften Ausführungsform der erfindungsgemäßen Verpackungsfolie lumineszieren die Pigmentpartikel, wenn sie mit UV- oder Infrarot-Licht bestrahlt werden, d.h. im Wellenlängenbereich von 100 bis 380 nm oder von 750 bis 2000 nm. Hier und im Folgenden sind sowohl Phosphoreszenz wie auch Fluoreszenz unter dem Begriff Lumineszenz subsummiert. Besonders geeignet sind Pigmentpartikel, die durch Bestrahlung mit UV-Licht zu Fluoreszenz im sichtbaren Wellenlängenbereich anregbar sind.

Die Pigmentpartikel enthalten einen oder mehrere Stoffe, wie z.B. Yttriumoxid oder polymere Pigmente. Durch entsprechende Stoffmischungen kann die Farbe des von den angeregten Pigmentpartikeln abgestrahlten Lumineszenzlichtes variiert werden. In einer anderen vorteilhaften Ausführungsform der Erfindung emittieren die Pigmentpartikel bei Bestrahlung im infraroten Wellenlängenbereich, insbesondere mit Infrarot-Laserlicht, sichtbares Licht. Derartige Pigmentpartikel enthalten Phosphore zum Umwandeln von Infrarotstrahlung in sichtbares Licht (sogenannte infrared-to-visible upconversion phosphors, abgekürzt IUP). Ein Beispiel für einen IUP ist $Er^{3+}$-aktiviertes Yttriumfluorid der allgemeinen Formel $Y_{1-x}Er_xF_3$ , worin x im Bereich von 0,05 bis 0,3 liegt.

Die erfindungsgemäße Verpackungsfolie umfasst eine oder mehrere Lagen aus Polymeren und wird mittels bekannter Produktionstechniken wie (Ko-)Extrusion, Kalandrieren und mono- oder biaxialer Streckung hergestellt. Während der Folienherstellung werden die Pigmentpartikel den polymeren Rohmaterialien, wie Harzen, Thermoplasten und dergleichen beigemengt. Alternativ hierzu werden die Pigmentpartikel auf eine Folienlage aufgestäubt oder in einer Suspension aufgetragen und hieran anschließend mit einer weiteren Folienlage abgedeckt und/oder durch Kalandrieren fixiert.

Vorzugsweise ist die erfindungsgemäße Verpackungsfolie tiefziehfähig. In einer weiteren, für die Einhüllung von Produkten vorteilhaften Ausführungsform ist die Verpackungsfolie als schrumpffähige Folie ausgestaltet.

Die Gesamtdicke der erfindungsgemäßen Verpackungsfolie beträgt 5 bis 4000 µm, bevorzugt 40 bis 500 µm, und besonders bevorzugt 60 bis 200 µm.

Die Verpackungsfolie kann eine beliebige Farbe haben; vorzugsweise ist sie weiß oder transparent.

Das erfindungsgemäße Verfahren umfasst einen Kennzeichnungs- und einen Erkennungsschritt, wobei im Kennzeichnungsschritt:

- ein Produkt mit der erfindungsgemäßen, zufällig verteilte Pigmentpartikel enthaltenden Verpackungsfolie nach den Ansprüchen 1 bis 11 verpackt wird;

- von einem ersten Teil des verpackten Produkts, der eine erste Teilfläche der Verpackungsfolie umfasst, mittels einer Abbildungsvorrichtung ein erstes Digitalbild aufgezeichnet wird;

- das erste Digitalbild mit einem Computerprogramm ausgewertet wird, wobei die relativen Lagekoordinaten und optional die Farbwerte von N1 in der ersten Teilfläche enthaltenen Pigmentpartikeln ermittelt werden;

- aus den N1 in der ersten Teilfläche enthaltenen Pigmentpartikeln durch Zufallsprinzip N Pigmentpartikel ausgewählt werden, wobei N kleiner/gleich N1 ist;

- aus den relativen Lagekoordinaten und optional den Farbwerten der N ausgewählten Pigmentpartikel gemäß einem Verschlüsselungsalgorithmus ein Identcode abgeleitet und der Identcode aufgezeichnet wird; und
  im Erkennungsschritt:

- von einem zweiten Teil des verpackten Produkts, der eine die erste Teilfläche enthaltende zweite Teilfläche der Verpackungsfolie umfasst, mittels einer Abbildungsvorrichtung ein zweites Digitalbild aufgezeichnet wird;

- das zweite Digitalbild mit dem Computerprogramm ausgewertet wird, wobei die relativen Lagekoordinaten und optional die Farbwerte von N2 in der zweiten Teilfläche enthaltenen Pigmentpartikeln ermittelt werden; und

- aus den N2 in der zweiten Teilfläche enthaltenen Pigmentpartikeln N2! / (N2-N)!·N! Kombinationen aus N voneinander verschiedenen Pigmentpartikeln gebildet und aus den N relativen Lagekoordinaten und optional den Farbwerten jeder dieser N2! / (N2-N)!·N! Kombinationen gemäß dem Verschlüsselungsalgorithmus ein Prüfcode abgeleitet und mit aufgezeichneten Identcodes auf Übereinstimmung verglichen wird.

Hier und im folgenden bezeichnet "N2! / (N2-N)!·N!" den Quotient der Fakultät von N2 geteilt durch das Produkt der Fakultäten von (N2-N) und N, der in der Kombinatorik üblicherweise "N2 über N" genannt wird.

In Weiterbildung des erfindungsgemäßen Verfahrens umfasst der Identcode Winkelwerte eines oder mehrerer Polygone mit m Ecken, wobei m eine natürliche Zahl mit $3 \leq m \leq N$ ist und die Koordinaten der Polygonecken den relativen Lagekoordinaten von m Pigmentpartikeln entsprechen.

Vorteilhaft wird im Kennzeichnungsschritt ein Etikett auf der Verpackungsfolie aufgebracht.

Im Kennzeichnungsschritt wird der Identcode auf die Verpackungsfolie, auf das Etikett und/oder in eine Datenbank gedruckt bzw. übertragen und steht für einen späteren Vergleich d.h. für die Authentifizierung zur Verfügung.

Das erfindungsgemäße Authentifizierungssystem umfasst neben der Verpackungsfolie gemäss den Ansprüchen 1 bis 11 eine erste und zweite Abbildungsvorrichtung und einen ersten und zweiten Computer oder einen Server mit einem Programm zur Verarbeitung von Digitalbildern. Vorzugsweise umfasst das Authentifizierungssystem eine Datenbank, wobei der erste und zweite Computer oder der Server mit der Datenbank verbunden sind. In weiterer Ausgestaltung der Erfindung umfasst das Authentifizierungssystem zudem ein Etikett.

Die erfindungsgemäße Verpackungsfolie wird zur Einhüllung von Produkten oder zur Herstellung von Formkörpern wie Behältern, Flaschen, Bechern, Schalen und dergleichen verwendet. Diese Formkörper werden aus der Verpackungsfolie mittels bekannter Verfahren, wie Tiefziehen hergestellt. Um aus der erfindungsgemäßen Verpak-

kungsfolie weitgehend geschlossene Behälter, wie etwa Flaschen zu erzeugen, wird die Verpackungsfolie unmittelbar nach der Extrusion geformt, z.B. mittels Blasextrusion.

Zur Einhüllung von Produkten, wie Lebensmitteln wird vorzugsweise eine tiefziehfähige und häufig auch schrumpffähige Ausführungsform der erfindungsgemäßen Verpackungsfolie verwendet. Hierfür eignen sich aus polymeren Materialien gebildete, mono- oder biaxial gereckte, schrumpffähige Ausführungsformen der erfindungsgemäßen Verpackungsfolie, insbesondere solche, die mit einer siegelfähigen Schicht ausgestattet sind.

Die Erfindung wird im Folgenden anhand von Figuren näher erläutert; es zeigen schematisch:

Fig. 1a     einen ersten Ausschnitt einer erfindungsgemäßen Verpackungsfolie mit Pigmentpartikeln;

Fig. 1b     einen zweiten Ausschnitt der Verpackungsfolie mit drei zufällig ausgewählten Pigmentpartikeln; und

Fig. 2a     ein Authentifizierungssystem, mit zwei Abbildungsvorrichtungen und einer Datenbank.

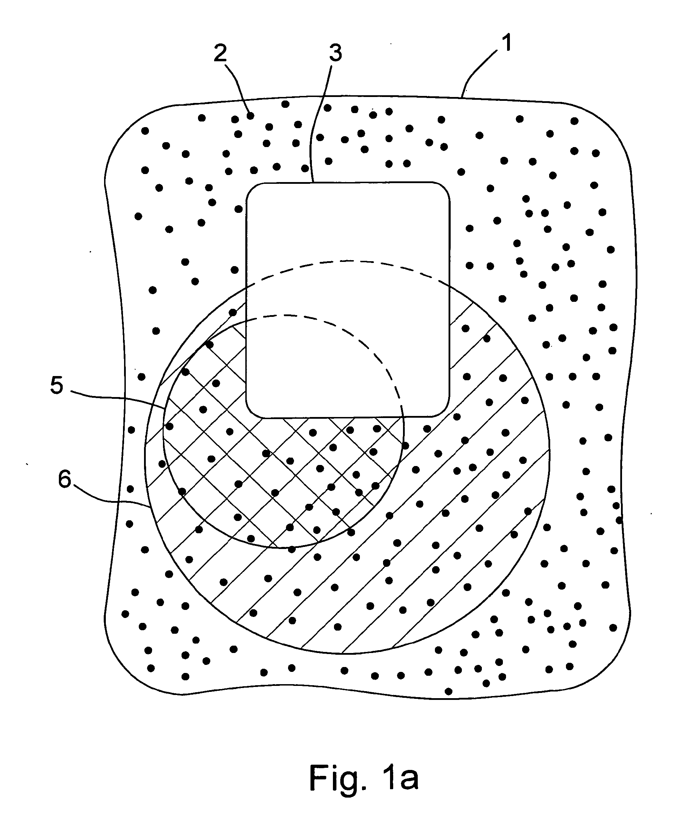

Fig.1a zeigt schematisch einen Ausschnitt einer Verpackungsfolie 1, die Pigmentpartikel 2 enthält. In einem Kennzeichnungsschritt wird von einer ersten Teilfläche 5 der Verpackungsfolie 1 mittels einer Abbildungsvorrichtung ein Digitalbild aufgenommen und mit - einem Computerprogramm ausgewertet. In einem nachgeschalteten Identifikationsschritt wird von einer zweiten Teilfläche 6, welche die erste Teilfläche 5 umfasst, ein weiteres Digitalbild aufgenommen und mit dem Computerprogramm ausgewertet. In Fig. 1a sind die Teilflächen 5 und 6 mit gekreuzter bzw. mit einfacher Linienschraffur hervorgehoben. Die Teilflächen 5 und 6 enthalten N1 bzw. N2 Pigmentpartikel. Weil die zweite Teilfläche 6 die erste Teilfläche 5 umfasst, bilden die in der ersten Teilfläche 5 enthaltenen N1 Pigmentpartikel eine Teilmenge der in der zweiten Teilfläche 6 enthaltenen N2 Pigmentpartikel, wobei $N1 \leq N2$ gilt. Im Weiteren ist in Fig. 1a ein optionales, im Kennzeichnungsschritt auf die Verpackungsfolie 1 aufgebrachtes Etikett 3 dargestellt. In einer vorteilhaften Ausführungsform des erfindungsgemäßen Verfahrens wird auf das Etikett 3 oder auf die Verpackungsfolie 1 ein Identcode aufgedruckt, welcher im Identifikationsschritt mittels Abbildungsvorrichtung und Computerprogramm erfasst und ausgewertet wird. Der Identcode ist maschinenlesbar und umfasst verschiedene Darstellungsformen wie z.B. alphanumerische Zeichen, Smartcode, Matrix- oder Barcode.

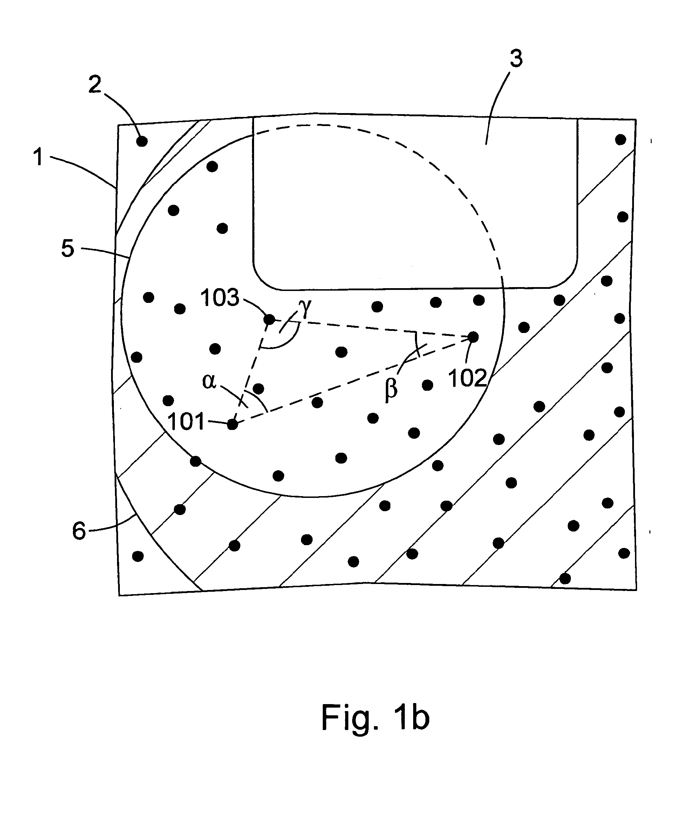

Fig. 1b zeigt schematisch einen vergrößerten Ausschnitt der Fig. 1a, wobei die Bezugszeichen 1 bis 6 die gleiche Bedeutung haben. Zudem ist ein aus drei Pigmentpartikeln (101, 102, 103) gebildetes Dreieck dargestellt. In einer vorteilhaften Ausführungsform des erfindungsgemäßen Verfahrens werden drei Pigmentpartikel (101, 102, 103), von dem für die Auswertung der Digitalbilder verwendeten Computerprogramm mittels eines zufallsbasierten Algorithmus aus den N1 in der Teilfläche 5 enthaltenen Pigmentpartikeln ausgewählt. Die relativen Lagekoordinaten der drei ausgewählten Pigmentpartikel (101, 102,103), insbesondere die Werte von drei Winkeln ($\alpha$, $\beta$, $\gamma$) des von den Pigmentpartikeln (101, 102, 103) gebildeten Dreiecks werden für den Identcode verwendet.

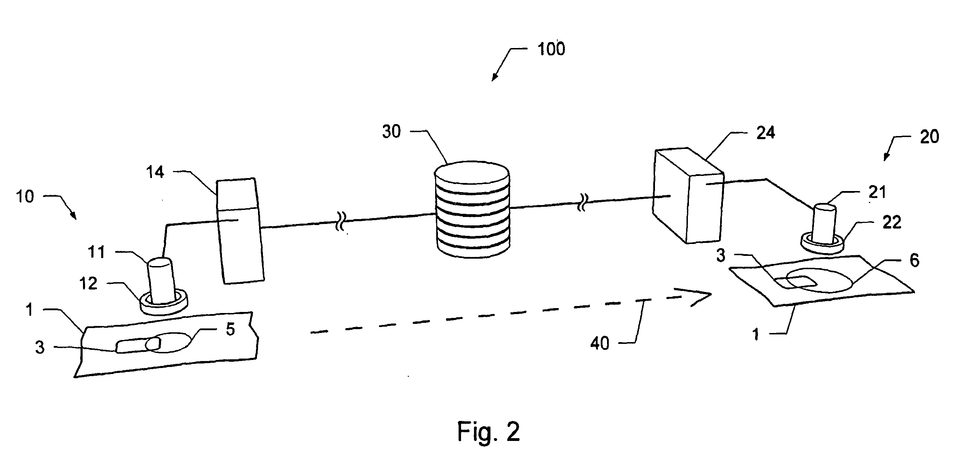

Fig. 2 zeigt schematisch eine beispielhafte Ausführungsform eines erfindungsgemäßen Authentifizierungssystem 100 mit Verpackungsfolie 1, einer ersten und zweiten Abbildungsvorrichtung (10, 20) und einem ersten und zweiten Computer (14, 24).

Die erste Abbildungsvorrichtung 10 und der erste Computer 14 werden im Kennzeichnungsschritt eingesetzt, d.h. in der Regel unmittelbar nachdem ein Produkt mit der Verpackungsfolie 1 verpackt worden ist. Zwecks Kennzeichnung wird von einem ersten Teil des verpackten Produkts mittels der Abbildungsvorrichtung 10 ein Digitalbild einer ersten Teilfläche 5 der Verpackungsfolie 1 aufgenommen. Die Teilfläche 5 entspricht dabei dem Bildfeld der Abbildungsvorrichtung 10. Die Teilfläche 5 wird ggf. so gewählt, dass ein im Rahmen der Kennzeichnung optional verwendetes Etikett 3 teilweise oder vollständig in der Teilfläche 5 enthalten ist. Die Abbildungsvorrichtung 10 ist mit dem Computer 14 verbunden. Das mit der Abbildungsvorrichtung 10 aufgenommene Digitalbild der Teilfläche 5 und der darin enthaltenen Pigmentpartikel wird an den Computer 14 übertragen und dort mittels eines Computerprogramms, das ein Modul für Bildverarbeitung und ein Modul für Verschlüsselung aufweist, ausgewertet. Von dem Computerprogramm wird sodann ein verschlüsselter Identcode ausgegeben. Vorzugsweise umfasst der Identcode Information über die relative geometrische Anordnung der Pigmentpartikel zueinander, beispielsweise die Winkel aller von jeweils drei Pigmentpartikeln gebildeten Dreiecke. Der Identcode wird in einer mit dem ersten Computer 14 verbundenen Datenbank 30 abgespeichert und/oder auf die Verpackungsfolie 1 oder das Etikett 3 übertragen bzw. gedruckt, vorzugsweise als alphanumerische Zeichenkette oder in Form eines Smartcodes.

Anschließend wird das solchermaßen gekennzeichnete Produkt an einen Empfänger versandt oder in ein Zwischenlager überstellt. Diese Frachtbewegung bzw. der

Frachtweg zwischen dem Kennzeichnungsschritt und einer hierauf folgenden Prüfstelle ist in Fig. 2 durch einen gestrichelten Pfeil 40 symbolisiert.

An der Prüfstelle erfolgt die Authentifizierung bzw. Identifikation des verpackten Produktes mittels der zweiten Abbildungsvorrichtung 20 und des zweiten Computers 24 in einer zur Kennzeichnung analogen Weise. Hierbei wird von einer zweiten Teilfläche 6, die die erste Teilfläche 5 umfasst, und der darin enthaltenen Pigmentpartikel ein Digitalbild aufgenommen und mittels des Computerprogramms ein Prüfcode ermittelt, wobei der Prüdcode nach dem gleichen Algorithmus wie im Kennzeichnungsschritt der Identcode bestimmt wird. Der auf diese Weise erhaltene Prüfcode wird mit in der Datenbank 30 abgespeicherten Identcodes verglichen. Stimmt der Prüfcode mit einem Identcode überein, so gilt das Produkt als authentisch. In einer alternativen Ausführungsform wird der durch Auswertung des Digitalbildes ermittelte Prüfcode mit einem im Kennzeichnungsschritt auf die Verpackungsfolie 1 oder das Etikett 3 aufgedruckten Identcode verglichen. Bei dieser alternativen Ausführungsform ist die Datenbank 30 nicht erforderlich. Zur Ermittlung des auf die Verpackungsfolie 1 oder das Etikett 3 aufgedruckten Identcodes ist das Computerprogramm mit einem Modul für Zeichen- oder Mustererkennung ausgestattet.

In einer alternativen Ausführungsform der Erfindung wird das Computerprogramm für die Auswertung der Digitalbilder statt auf den Computern (14, 24) auf einem in Fig. 2 nicht dargestellten Server ausgeführt, wobei die Computer (14, 24) über Datenleitungen bzw. über das Internet mit dem Server verbunden sind und die Digitalbilder der Teilflächen 5 und 6 an den Server übermitteln.

Vorzugsweise umfasst die Abbildungsvorrichtung (10, 20) eine Kamera (11, 21) mit einem Kameraobjektiv und einem CCD- oder CMOS-Sensor. Bei dem CCD- oder CMOS-Sensor handelt es sich um einen Zeilen- oder Flächensensor.

Wird ein mit der Verpackungsfolie 1 verpacktes Produkt während der Bildaufnahme bewegt, z.B. mittels eines Förderbandes, so wird die Abbildungsvorrichtung (10, 20) ggf. im Scanner-Modus betrieben, wobei vorteilhaft ein CCD- oder CMOS-Zeilensensor verwendet wird. Falls es erforderlich ist, möglichst hohe Auflösung und Kontrast zu erzielen, wird der Zeilensensor nach dem TDI-Prinzip (Time-Delay and Integration) betrieben. Entsprechende TDI-Sensoren sind kommerziell erhältlich.

In einer besonders bevorzugten Ausführungsform des erfindungsgemäßen Authentifizierungssystems 100 umfasst die Abbildungsvorrichtung (10, 20) eine Beleuchtungseinheit (12, 22), die UV-Licht mit Wellenlängen des Bereiches 100 nm bis $\leq$ 380 nm oder IR-Licht mit Wellenlängen von größer 750 nm bis 2000 nm abstrahlt. Eine derartige Beleuchtungseinheit (12, 22) dient zur Lumineszenz-Anregung der in der Verpackungsfolie 1 verteilten Pigmentpartikel 2. Der Begriff Lumineszenz-Anregung umfasst hier und im Folgenden die durch Bestrahlung mit Licht angeregte Emission von Fluoreszenz- oder Phosphoreszenzlicht. Die Pigmentpartikel 2 enthalten einen Stoff, der mindestens in einem der oben angegebenen UV- bzw. Infrarot-Wellenlängenbereiche eine oder mehrere lumineszente Absorptionslinien aufweist. Insbesondere geeignet sind Stoffe, die bei Anregung mit UV-Licht im sichtbaren Bereich (380 - 750 nm) fluoreszieren oder sogenannte IUP (infrared upconversion phosphors), wie $Y_{1-x}Er_xF_3$ (mit 0,05 <x < 0,3), die Infrarotstrahlung in sichtbares Licht umwandeln.

Neben den Lagekoordinaten der Pigmentpartikel kann auch die Farbe des von den Pigmentpartikeln abgestrahlten Lichtes für die Ermittlung eines Ident- und Prüfcodes genutzt werden. Hierzu wird die Abbildungsvorrichtung (10, 20) mit einem Farbsensor, bevorzugt einem CCD- oder CMOS-Sensor mit integriertem Farbfilter-Array, z.B. einem Bayer-Matrixfilter mit drei Bandpässen in den Bereichen Rot, Grün und Blau (RGB), verwendet. Bei einem Farbsensor mit Bayer-Matrixfilter umfasst ein digitales Farbpixel jeweils vier, in einer 2x2-Matrix angeordnete Zellen des CCD- oder CMOS-Flächensensors, wobei vor zwei der vier Zellen ein grüner Farbfilter und vor den beiden verbleibenden Zellen jeweils ein roter und ein blauer Filter angeordnet ist. Derartige Farbsensoren werden millionenfach in gewöhnlichen Digitalkameras eingesetzt. Alternativ hierzu kann auch ein hochauflösender 3-Chip-Sensor, bei dem das Bild mittels eines Prismas auf drei, jeweils mit einem Rot-, Grün- und Blau-Filter ausgestattete Sensoren aufgeteilt wird, benutzt werden.

Bei dieser Ausführungsform wird einem Pigmentpartikel ein Farbwert bzw. ein RGB-, HSV-Wert (= Hue, Saturation, Value) oder dergleichen zugeordnet. Der ermittelte Farbwert wird dann in verschlüsselter Form in den Ident- und Prüfcode aufgenommen. Im Fall, dass die Wellenlänge des von den Pigmentpartikeln abgestrahlten Lumineszenzlichtes im UV- oder Infrarot-Bereich liegt, wird eine hierfür geeignete Abbildungsvorrichtung (10, 20) verwendet, d.h. eine UV- oder Infrarotkamera.

Neben den Lagekoordinaten und der Farbe des von den Pigmentpartikeln emittierten Lumineszenzlichtes schafft die vorliegende Erfindung zudem die Möglichkeit, die Abklingzeit des Lumineszenzlichtes als Parameter in das Sicherheitskennzeichen einzubeziehen. Zu diesem Zweck ist die Beleuchtungseinheit (12, 22) schaltbar oder für Pulsbetrieb ausgelegt und die Abbildungsvorrichtung (10, 20) mit einer elektronischen Steuerung für die Ausgabe von Triggerpulsen und für Zeitmessung ausgerüstet.

## Patentansprüche

1. Verpackungsfolie (1) für Produktauthentifizierung, umfassend Pigmentpartikel (2), wobei die mittlere Anzahl der Pigmentpartikel (2) pro cm$^2$ der Verpackungsfolie (1) im Bereich von 1 bis 100 liegt; und die Pigmentpartikel (2) in der Fläche der Verpackungsfolie (1) in einer Zufallsverteilung vorliegen.

2. Verpackungsfolie (1) nach Anspruch 1, **dadurch gekennzeichnet, dass** die mittlere Anzahl der Pigmentpartikel

(2) pro cm$^2$ im Bereich von 1 bis 10, bevorzugt 1 bis 5, und insbesondere im Bereich von 1 bis 2 liegt und dass der mittlere äquivalente Durchmesser der Pigmentpartikel (2) im Bereich von 100 bis 50000 nm liegt.

3. Verpackungsfolie (1) nach Anspruch 1, **dadurch gekennzeichnet, dass** die Pigmentpartikel (2) im Wellenlängenbereich von 380 bis 750 nm im wesentlichen transparent sind.

4. Verpackungsfolie (1) nach Anspruch 1, **dadurch gekennzeichnet, dass** die Pigmentpartikel (2) weiss sind.

5. Verpackungsfolie (1) nach Anspruch 1, **dadurch gekennzeichnet, dass** die Pigmentpartikel (2) im Wellenlängenbereich von 100 bis kleiner 380 nm oder im Wellenlängenbereich von größer 750 bis 2000 nm mindestens eine Lumineszenz aufweisen.

6. Verpackungsfolie (1) nach Anspruch 1, **dadurch gekennzeichnet, dass** die Pigmentpartikel (2) Yttriumoxid enthalten.

7. Verpackungsfolie (1) nach Anspruch 1, **dadurch gekennzeichnet, dass** die Verpackungsfolie (1) eine oder mehrere Lagen aus Polymeren umfasst, dass die Verpackungsfolie (1) vorzugsweise thermoplastisch und insbesondere tiefziehfähig oder schrumpfbar und optional bedruckbar ist.

8. Verfahren zur Authentifizierung von Produkten, umfassend einen Kennzeichnungs- und einen Erkennungsschritt, wobei
im Kennzeichnungsschritt:

ein Produkt mit einer zufällig verteilte Pigmentpartikel enthaltenden Verpackungsfolie (1) nach den Ansprüchen 1 bis 7 verpackt wird;
von einem ersten Teil des verpackten Produkts, der eine erste Teilfläche (5) der Verpackungsfolie (1) umfasst, mittels einer Abbildungsvorrichtung ein erstes Digitalbild aufgezeichnet wird;
das erste Digitalbild mit einem Computerprogramm ausgewertet wird, wobei die relativen Lagekoordinaten und optional die Farbwerte von N 1 in der ersten Teilfläche (5) enthaltenen Pigmentpartikeln ermittelt werden;
aus den N1 in der ersten Teilfläche (5) enthaltenen Pigmentpartikeln durch Zufallsprinzip N Pigmentpartikel ausgewählt werden, wobei N kleiner/gleich N1 ist;
aus den relativen Lagekoordinaten und optional den Farbwerten der N ausgewählten Pigmentpartikel gemäß einem Verschlüsselungsalgorithmus ein Identcode abgeleitet und der Identcode aufgezeichnet wird; und
im Erkennungsschritt:

von einem zweiten Teil des verpackten Produkts, der eine die erste Teilfläche (5) enthaltende zweite Teilfläche (6) der Verpackungsfolie (1) umfasst, mittels einer Abbildungsvorrichtung ein zweites Digitalbild aufgezeichnet wird;
das zweite Digitalbild mit dem Computerprogramm ausgewertet wird, wobei die relativen Lagekoordinaten und optional die Farbwerte von N2 in der zweiten Teilfläche (6) enthaltenen Pigmentpartikeln ermittelt werden; und
aus den N2 in der zweiten Teilfläche (6) enthaltenen Pigmentpartikeln N2! / (N2-N)!·N! Kombinationen aus N voneinander verschiedenen Pigmentpartikeln gebildet und aus den N relativen Lagekoordinaten und optional den Farbwerten jeder dieser N2! / (N2-N)!·N! Kombinationen gemäß dem Verschlüsselungsalgorithmus ein Prüfcode abgeleitet und mit aufgezeichneten Identcodes auf Übereinstimmung verglichen wird.

9. Verfahren nach Anspruch 8, **dadurch gekennzeichnet, dass** der Identcode Winkelwerte eines oder mehrerer Polygone mit m Ecken umfasst, wobei m eine natürliche Zahl mit $3 \leq m \leq N$ ist und die Koordinaten der Polygonecken den relativen Lagekoordinaten von m Pigmentpartikeln entsprechen.

10. Verfahren nach Anspruch 8, **dadurch gekennzeichnet, dass** im Kennzeichnungsschritt auf der Verpackungsfolie (1) ein Etikett (3) aufgebracht wird.

11. Verfahren nach Anspruch 8, 9 oder 10, **dadurch gekennzeichnet, dass** im Kennzeichnungschritt der Identcode auf die Verpackungsfolie (1) oder das Etikett (3) übertragen wird.

12. Verfahren nach Anspruch 8, 9 oder 11, **dadurch gekennzeichnet, dass** im Kennzeichnungsschritt der Identcode in einer Datenbank (30) abgespeichert wird.

13. Authentifizierungssystem (100), umfassend eine Verpackungsfolie (1) nach den Ansprüchen 1 bis 7, eine erste und zweite Abbildungsvorrichtung (10, 20) und einen ersten und zweiten Computer (14, 24) oder einen Server mit einem Programm zur - Verarbeitung von Digitalbildern.

14. Authentifizierungssystem (100) nach Anspruch 13, **dadurch gekennzeichnet, dass** es eine Datenbank (30) umfasst, wobei der erste und zweite Computer (14, 24) oder der Server mit der Datenbank (30) verbunden sind.

15. Authentifizierungssystem (100) nach Anspruch 13, **dadurch gekennzeichnet, dass** es ein Etikett (3) umfasst.

16. Verwendung einer Verpackungsfolie (1) nach den Ansprüchen 1 bis 7 zur Einhüllung von Produkten oder zur Herstellung von Formkörpern.

**Claims**

1. Packaging film (1) for product authentication, comprising pigment particles (2), wherein the average number of the pigment particles (2) per $cm^2$ of the packaging film (1) is in the range of 1 to 100; and the pigment particles (2) are present in a random distribution in the surface area of the packaging film (1).

2. Packaging film (1) according to Claim 1, **characterized in that** the average number of the pigment particles (2) per $cm^2$ is in the range of 1 to 10, preferably 1 to 5, and in particular in the range of 1 to 2, and **in that** the average equivalent diameter of the pigment particles (2) is in the range of 100 to 50 000 nm.

3. Packaging film (1) according to Claim 1, **characterized in that** the pigment particles (2) are substantially transparent in the wavelength range of 380 to 750 nm.

4. Packaging film (1) according to Claim 1, **characterized in that** the pigment particles (2) are white.

5. Packaging film (1) according to Claim 1, **characterized in that** the pigment particles (2) have at least a luminescence in the wavelength range of from 100 to less than 380 nm or in the wavelength range of from greater than 750 to 2000 nm.

6. Packaging film (1) according to Claim 1, **characterized in that** the pigment particles (2) contain yttrium oxide.

7. Packaging film (1) according to Claim 1, **characterized in that** the packaging film (1) comprises one or a plurality of polymer layers, **in that** the packaging film (1) is preferably thermoplastic, and in particular is thermoformable or shrinkable and optionally printable.

8. Method for the authentication of products, comprising a marking step and a recognition step, wherein in the marking step:

   a product is packaged with a packaging film (1) containing randomly distributed pigment particles according to Claims 1 to 7;
   an imaging device is used to record a first digital image of a first part of the packaged product, said first part comprising a first partial area (5) of the packaging film (1);
   the first digital image is evaluated by means of a computer program, wherein the relative positional coordinates and optionally the color values of N1 pigment particles contained in the first partial area (5) are determined;
   from the N1 pigment particles contained in the first partial area (5) N pigment particles are selected by the random principle, where N is less than/equal to N1;
   an identity code is derived from the relative positional coordinates and optionally the color values of the N selected pigment particles in accordance with an encryption algorithm and the identity code is recorded; and in the recognition step:

   an imaging device is used to record a second digital image of a second part of the packaged product, said second part comprising a second partial area (6) of the packaging film (1) said second partial area containing the first partial area (5);
   the second digital image is evaluated by means of the computer program, wherein the relative positional coordinates and optionally the color values of N2 pigment particles contained in the second partial area (6) are determined; and
   from the N2 pigment particles contained in the second partial area (6), $N2!/(N2-N)!$ $_CN!$ combinations of N mutually different pigment particles are formed and a check code is derived from the N relative positional coordinates and optionally the color values of each of said N2!/(N2-N)!$_{\mathrm{C}}$N! combinations in accordance with the encryption algorithm and is compared with recorded identity codes with regard to correspondence.

9. Method according to Claim 8, **characterized in that** the identity code comprises angle values of one or a plurality of polygons having m corners, wherein m is a natural number where $3 \leq m \leq N$ and the coordinates of the polygon corners correspond to the relative positional coordinates of m pigment particles.

10. Method according to Claim 8, **characterized in that**, in the marking step, a label (3) is applied on the packaging film (1).

11. Method according to Claim 8, 9 or 10, **characterized in that**, in the marking step, the identity code is transferred to the packaging film (1) or the label (3).

12. Method according to Claim 8, 9 or 11, **characterized in that**, in the marking step, the identity code is stored in a database (30).

13. Authentication system (100), comprising a packaging film (1) according to Claims 1 to 7, a first and second imaging device (10, 20) and a first and second computer (14, 24) or a server with a program for processing digital images.

14. Authentication system (100) according to Claim 13, **characterized in that** it comprises a database (30), wherein the first and second computers (14, 24) or the server are/is connected to the database (30).

15. Authentication system (100) according to Claim 13, **characterized in that** it comprises a label (3).

16. Use of a packaging film (1) according to Claims 1 to 7 for enveloping products or for producing shaped bodies.

**Revendications**

1. Film d'emballage (1) pour une authentification de produit, comprenant des particules de pigment (2), dans laquelle le nombre moyen de particules de pigment (2) par cm$^2$ du film d'emballage (1) se situe dans la plage de 1 à 100 et les particules de pigment (2) ont une distribution aléatoire à la surface du film d'emballage (1).

2. Film d'emballage (1) selon la revendication 1, **caractérisé en ce que** le nombre moyen de particules de pigment (2) par cm$^2$ se situe dans la plage de 1 à 10, de préférence de 1 à 5 et, en particulier, dans la plage de 1 à 2, et **en ce que** le diamètre équivalent moyen des particules de pigment (2) se situe dans la plage de 100 à 50 000 nm.

3. Film d'emballage (1) selon la revendication 1, **caractérisé en ce que** les particules de pigment (2) sont sensiblement transparentes dans la plage de longueurs d'onde de 380 à 750 nm.

4. Film d'emballage (1) selon la revendication 1, **caractérisé en ce que** les particules de pigment (2) sont blanches.

5. Film d'emballage (1) selon la revendication 1, **caractérisé en ce que** les particules de pigment (2) présentent au moins une luminescence dans la plage de longueurs d'onde de 100 à moins de 380 nm ou dans la plage de longueurs d'onde de plus de 750 à 2000 nm.

6. Film d'emballage (1) selon la revendication 1, **caractérisé en ce que** les particules de pigment (2) contiennent de l'oxyde d'yttrium.

7. Film d'emballage (1) selon la revendication 1, **caractérisé en ce que** le film d'emballage (1) comprend une ou plusieurs couches de polymères, **en ce que** le film d'emballage (1) est de préférence thermoplastique et, en particulier, peut être façonné par emboutissage profond ou est rétractable et éventuellement imprimable.

8. Procédé d'authentification de produits, comprenant une étape de marquage et une étape d'identification, dans lequel :

   à l'étape de marquage,

un produit est emballé avec un film d'emballage (1) contenant des particules de pigment distribuées de manière aléatoire selon les revendications 1 à 7 ;

une première image numérique est enregistrée par une première partie du produit emballé, qui comprend une première surface partielle (5) du film d'emballage (1), au moyen d'un dispositif de représentation ;

la première image numérique est exploitée par un programme informatique, dans lequel les coordonnées de position relatives et éventuellement les valeurs de couleurs sont établies par N1 particules de pigment contenues dans la première surface partielle (5) ;

N particules de pigment sont choisies dans les N1 particules de pigment contenues dans la première surface partielle (5) de manière aléatoire, dans lequel N est inférieur ou égal à N1 ; un code d'identification est tiré des coordonnées de position relatives et éventuellement des valeurs de couleurs des N particules de pigment choisies selon un algorithme de chiffrage et le code d'identification est enregistré ; et, à l'étape d'identification, une seconde image numérique est enregistrée par une seconde partie du produit emballé, qui comprend une seconde surface partielle (6), contenant la première surface partielle (5), du film d'emballage (1), au moyen d'un dispositif de représentation ; la seconde image numérique est exploitée par le programme informatique, dans lequel les coordonnées de positions relatives et éventuellement les valeurs de couleurs sont établies par N2 particules de pigment contenues dans la seconde surface partielle (6); et

N2!/(N2-N)!N! combinaisons constituées de N particules de pigment différentes l'une de l'autre sont formées dans les N2 particules de pigment contenues dans la seconde surface partielle (6) et un code de vérification est tiré des N coordonnées de positions relatives et éventuellement des valeurs de couleurs de chacune de ces N2!/(N2-N)!N! combinaisons selon l'algorithme de chiffrage et est comparé aux codes d'identification enregistrés pour une correspondance.

9. Procédé selon la revendication 8, **caractérisé en ce que** le code d'identification comprend des valeurs angulaires d'un ou plusieurs polygones avec m angles, dans lequel m est un nombre naturel avec $3 \leq m \leq N$ et les coordonnées des angles de polygones correspondent aux coordonnées de positions relatives de m particules de pigment.

10. Procédé selon la revendication 8, **caractérisé en ce qu'**à l'étape d'identification, une étiquette (3) est appliquée sur le film d'emballage (1).

11. Procédé selon la revendication 8, 9 ou 10, **caractérisé en ce qu'**à l'étape d'identification, le code d'identification est transféré sur le film d'emballage (1) ou l'étiquette (3).

12. Procédé selon la revendication 8, 9 ou 11, **caractérisé en ce qu'**à l'étape d'identification, le code d'identification est mémorisé dans une banque de données (30).

13. Système d'authentification (100), comprenant un film d'emballage (1) selon les revendications 1 à 7, un premier et un second dispositif de représentation (10, 20) et un premier et un second ordinateur (14, 24) ou un serveur avec un programme de traitement d'images numériques.

14. Système d'authentification (100) selon la revendication 13, **caractérisé en ce qu'**il comprend une banque de données (30), dans lequel le premier et le second ordinateur (14, 24) ou le serveur sont connectés à la banque de données (30).

15. Système d'authentification (100) selon la revendication 13, **caractérisé en ce qu'**il comprend une étiquette (3).

16. Utilisation d'un film d'emballage (1) selon les revendications 1 à 7 pour envelopper des produits ou à des fins de fabrication de corps moulés.

Fig. 1a

Fig. 1b

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005140495 A
- US 4218674 A
- DE 10304805 A1
- DE 602004007850 T2